# EUROPEAN PATENT SPECIFICATION

(11) **EP 1 835 789 B1**
(45) Date of publication and mention of the grant of the patent: **29.05.2013**
(21) Application number: 05822532.7
(22) Date of filing: 27.12.2005
(51) Int. Cl.: H05H 1/24, B01J 19/08, F01N 3/02, F01N 3/08, H05H 1/46

(54) **PLASMA GENERATING ELECTRODE AND PLASMA REACTOR**
PLASMAERZEUGUNGSELEKTRODE UND PLASMAREAKTOR
ÉLECTRODE GÉNÉRATRICE DE PLASMA ET RÉACTEUR À PLASMA

(30) Priority: 27.12.2004 JP 2004377121
(43) Date of publication of application: 19.09.2007
(73) Proprietor: NGK Insulators, Ltd., Nagoya-city, Aichi 467-8530 (JP); HONDA MOTOR CO., LTD., Tokyo 107-8556 (JP)
(72) Inventor: FUJIOKA, Yasumasa, NGK INSULATORS, LTD., Nagoya-shi, Aichi 467-8530 (JP); KONDO, Atsuo, NGK INSULATORS, LTD., Nagoya-shi, Aichi 467-8530 (JP); MASUDA, Masaaki, NGK INSULATORS, LTD., Nagoya-shi, Aichi 467-8530 (JP); DOSAKA, Kenji, KK HONDA GIJUTSU KENKYUSHO, Wako-shi, Saitama 351-0193 (JP); IWAMA, Keizo, KK HONDA GIJUTSU KENKYUSHO, Wako-shi, Saitama 351-0193 (JP)
(74) Representative: Paget, Hugh Charles Edward
(86) International application number: PCT/JP2005/023976
(87) International publication number: WO 2006/070838

(56) References cited:
- WO-A1-02/087880
- JP-A- 08 185 999
- JP-A- 2002 213 228
- JP-A- 2004 181 418
- JP-A- 2004 245 096
- JP-A- 2004 363 552
- US-A1- 2002 028 163
- US-A1- 2004 069 411
- US-B1- 6 464 945

## Description

### TECHNICAL FIELD

The present invention relates to a plasma generating electrode and a plasma reactor. More particularly, the present invention relates to a plasma generating electrode and a plasma reactor capable of achieving simple and reliable electrical connection.

### BACKGROUND ART

A silent discharge occurs when disposing a dielectric between two electrodes secured on each end and applying a high alternating current voltage or a periodic pulse voltage between the electrodes. In the resulting plasma field, active species, radicals, and ions are produced to promote reaction and decomposition of gases. This phenomenon may be utilized to remove toxic components contained in an engine exhaust gas or an incinerator exhaust gas.

For example, a plasma reactor has been disclosed such as an air cleaner utilizing ozone or a plasma reactor which processes toxic components (e.g. NOₓ, particulate matter (PM) such as carbon particulates, HC, and CO) contained in an exhaust gas discharged from an engine, an incinerator, or the like by causing the exhaust gas to pass through the plasma field (see patent document 1, for example).

As an example of such a plasma reactor, a plasma reactor can be given which includes a plasma generating electrode in which a number of sheet-shaped unit electrodes including a ceramic dielectric and a conductive film disposed in the ceramic dielectric are hierarchically stacked at specific intervals. In such a plasma generating electrode, a conductive terminal for electrically connecting each unit electrode is disposed on the end face of the sheet-shaped unit electrode.
[Patent document I] US-A-2002/0174938

US 2004/0069411 describes a plasma reactor element. The element is formed of dielectric layers with an electrode layer. The electrode layer protrudes from the edges of the dielectric layers and extends along the end face thereof, to form a bus connector. Multiple of these units can be stacked. In an alternative construction, opposing finger-like electrodes are meshed to form a layered structure. Bus connection paths connect the electrodes to terminals.

US 6,464,945 describes plasma reactor electrode plates having an 'extension' of the conductive film on one surface thereof. These portions are connected by a vertical conductive trace.

US 2002/0028163 describes plasma reactor electrode plates having an 'extension' of the conductive film on one surface thereof. These extensions are 'turned up' to form connectors at the edges of the plates. Also described is using soldering or welding, or fixation of a bar terminal, to provide electrical connection.

WO 02/087880 describes a plasma reactor electrode including an electrode plate laminated between ceramic plates. Electrical vias filled with conductive material are formed in each electrode. By stacking the electrodes with the vias aligned, an electrical bus is provided which connects alternating electrodes.

### DISCLOSURE OF THE INVENTION

According to the above plasma generating electrode, since the conductive terminal is disposed on the end face of the unit electrode, the area of the connection portion of the conductive terminal is reduced to a large extent, whereby connection of the conductive terminal becomes difficult, or the bond strength of the conductive terminal is decreased. It is also difficult to electrically connect such a conductive terminal with an external power supply or the like.

The present invention has been achieved in view of the above-described problems, and has an object of providing a plasma generating electrode and a plasma reactor capable of achieving simple and reliable electrical connection.

In order to achieve the above object, the present invention provides the plasma generating electrode as set out in claim 1 and the plasma reactor as set out in claim 8.

Described herein are:
[1] A plasma generating electrode comprising: two or more opposing sheet-shaped unit electrodes and conductive terminals as connection portions for applying a voltage between the unit electrodes, and capable of generating plasma upon application of a voltage between the unit electrodes through the conductive terminals, at least one of the opposing unit electrodes including a sheet-shaped ceramic dielectric and a conductive film, wherein the conductive film is disposed in the ceramic dielectric and characterised in that the conductive film has a further portion extending on a surface of the ceramic dielectric at an and of the ceramic dielectric opposite to the other unit electrode and the conductive terminal for each such electrode terminal being disposed on me portion of the conductive film extending on the surface of the ceramic dielectric at the and of the ceramic dielectric opposite to the other unit electrode (hereinafter may be called "first aspect of the present invention").

[2] A plasma generating electrode comprising: two or more opposing sheet-shaped unit electrodes and conductive terminals as connection portions for applying a voltage between the unit electrodes, and capable of generating plasma upon application of a voltage between the unit electrodes through the conductive terminals, at least one of the opposing unit electrodes including a sheet-shaped ceramic dielectric and a conductive film, wherein the conductive film 19 disposed in the ceramic dielectric and characterized in that the conductive film has a further portion extending outside the ceramic dielectric in the same direction as a direction in which the conductive film is disposed in the ceramic dielectric, and the conductive terminal for each such electrode being disposed on the further portion of conductive film extending outside the ceramic dielectric (hereinafter may be called "second aspect of the present invention").

[3] The plasma generating electrode according to [1] or [2], wherein the conductive terminal is bonded to the conductive film by welding, brazing, or diffusion bonding.

[4] The plasma generating electrode according to [1] or [2], wherein the conductive terminal is formed by applying a conductive material to a surface of the conductive film.

[5] The plasma generating electrode according to any one of [1] to [4], wherein the conductive terminal includes at least one metal selected from the group consisting of iron, nickel, chromium, cobalt, titanium, aluminum, gold, silver, and copper.

[6] The plasma generating electrode according to any one of [1] to [5], wherein the conductive film includes at least one metal selected from the group consisting of tungsten, molybdenum, manganese, chromium, titanium, zirconium, nickel, iron, silver, copper, platinum, and palladium.

[7] The plasma generating electrode according to any one of [1] to [6], comprising a collector member which electrically connects the unit electrodes of the same polarity.

[8] A plasma reactor comprising the plasma generating electrode according to any one of [1] to [7], and a casing having a passage (gas passage) for a gas containing a specific component formed therein, wherein, when the gas is introduced into the gas passage of the casing, the specific component contained in the gas can be reacted by plasma generated by the plasma generating electrode (hereinafter may be called "third aspect of the present invention").

[9] The plasma reactor according to [8], further comprising a pulse power supply for applying a voltage to the plasma generating electrode.

[10] The plasma reactor according to [9], wherein the pulse power supply includes at least one SI thyristor.

The plasma generating electrode according to the present invention allows simple and reliable electrical connection of each unit electrode. Since the plasma reactor according to the present invention includes the above plasma generating electrode, the plasma reactor may be suitably used as an air cleaner and an exhaust gas processing device.

### BRIEF DESCRIPTION OF THE DRAWINGS

FIG. 1 is a cross-sectional view schematically showing one embodiment of a plasma generating electrode according to the present invention.
FIG. 2 is a cross-sectional view showing a unit electrode used for the plasma generating electrode shown in FIG. 1.
FIG. 3 is a plan view of the unit electrode shown in FIG. 2.
FIG. 4 is a cross-sectional view schematically showing another embodiment of the plasma generating electrode according to the present invention.
FIG. 5 is a cross-sectional view showing a unit electrode used for the plasma generating electrode shown in FIG. 4.
FIG. 6 is a plan view of the unit electrode shown in FIG. 5.
FIG. 7 is a cross-sectional view schematically showing one embodiment of a plasma generating electrode according to the present invention.
FIG. 8 is a cross-sectional view showing a unit electrode used for the plasma generating electrode shown in FIG. 7.
FIG. 9 is a plan view of the unit electrode shown in FIG. 8.
FIG. 10 is a cross-sectional view schematically showing another embodiment of a plasma generating electrode according to the present invention.
FIG. 11 is a cross-sectional view showing another example of a unit electrode used for the plasma generating electrode shown in FIG. 7.
FIG. 12 is a plan view of the unit electrode shown in FIG. 11.
FIG. 13 is a cross-sectional view schematically showing another example of one embodiment of a plasma generating electrode according to the present invention
FIG. 14 is a cross-sectional view showing a unit electrode used for the plasma generating electrode shown in FIG. 13.
FIG. 15 is a plan view of the unit electrode shown in FIG. 14.
FIG. 16 is a cross-sectional view showing one embodiment of a plasma reactor according to the present invention along a plane perpendicular to the surface of the unit electrode. of the plasma generating electrode.
FIG. 17 is a cross-sectional view along the line A-A shown in FIG. 16.

### EXPLANATION OF SYMBOLS

1: plasma generating electrode, 2: unit electrode, 3: ceramic dielectric, 4: conductive film, 5: conductive terminal, 6: holding member, 7: through-hole, 11: plasma generating electrode, 12: unit electrode, 13: ceramic dielectric, 14: conductive film, 15: conductive terminal, 16: opening, 17: collector member, 21: plasma reactor, 22: casing, 23: gas passage, b: plasma generation region

### BEST MODE FOR CARRYING OUT THE INVENTION

Embodiments of the plasma generating electrode and the plasma reactor according to the present invention are described below in detail with reference to the drawings. Note that the present invention is not limited to the following embodiments. Various alterations, modifications, and improvements may be made without departing from the scope defined in the claims of the present invention based on knowledge of a person skilled in the art.

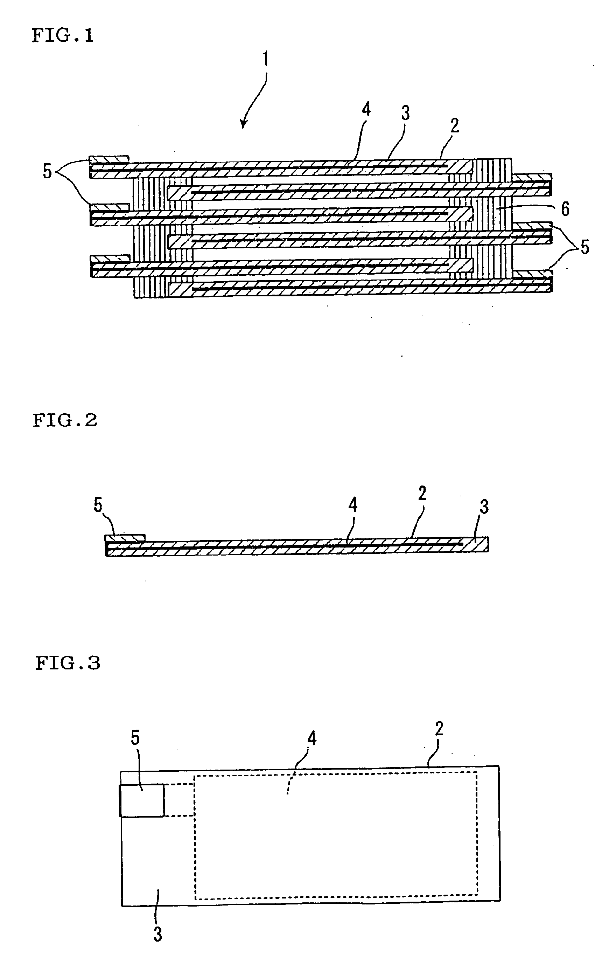

One embodiment of the plasma generating electrode according to the invention is described below in detail. FIG. 1 is a cross-sectional view schematically showing the plasma reactor according to this embodiment. FIG. 2 is a cross-sectional view schematically showing a unit electrode used for the plasma generating electrode shown in FIG. 1, and FIG. 3 is a plan view of the unit electrode shown in FIG. 2. As shown in FIGS. 1 to 3, a plasma generating electrode 1 according to this embodiment includes two or more opposing sheet-shaped unit electrodes 2 and conductive terminals 5 as connection portions for applying a voltage between the unit electrodes 2, and is capable of generating plasma upon application of a voltage between the unit electrodes 2 through the conductive terminals 5, wherein at least one of the opposing unit electrodes 2 includes a sheet-shaped ceramic dielectric 3 and a conductive film 4 disposed in the ceramic dielectric 3 and partially extending on a surface of the ceramic dielectric 3 opposite to the other unit electrode 2at an end of the ceramic dielectric 3, and the conductive terminal 5 is electrically connected with the conductive film 4 extending on the surface of the ceramic dielectric 3 opposite to the other unit electrode 2 on the end of the ceramic dielectric 3.

In an ordinary plasma generating electrode, a conductive terminal for electrically connecting a unit electrode is disposed on an end face of a sheet-shaped unit electrode. Therefore, since the area of the connection portion of the conductive terminal is small, connection of the conductive terminal may be difficult, or the bond strength of the conductive terminal may be decreased. In the plasma generating electrode 1 according to this embodiment, since the conductive terminal 5 is electrically connected with the portion of the conductive film 4 extending on the surface of the ceramic dielectric 3 opposite to the other unit electrode 2 on the end of the ceramic dielectric 3, as described above, the area of the connection portion of the conductive terminal 5 can be increased in comparison with an ordinary plasma generating electrode, whereby simple and reliable electrical connection is achieved.

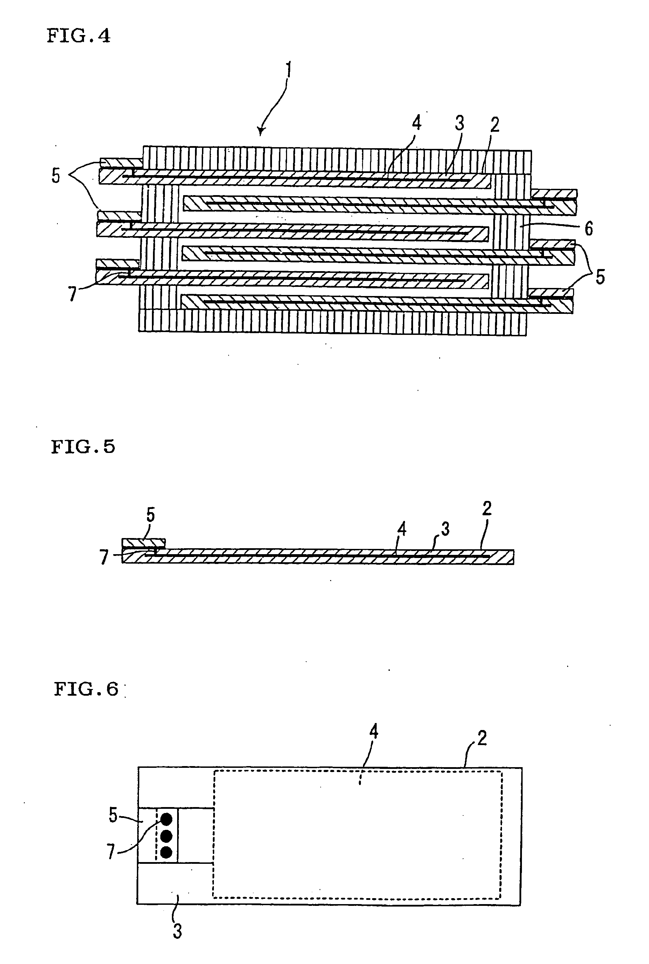

The conductive film 4 shown in FIGS. 1 to 3 is disposed in the ceramic dielectric 3 and partially extends on the surface of the ceramic dielectric 3 opposite to the other unit electrode 2 at the end of the ceramic dielectric 3 through the end face of the ceramic dielectric 3. Note that the path through which the conductive film 4 extends from the inside of the ceramic dielectric 3 to the surface opposite to the other unit electrode 2 is not limited thereto. As shown in FIGS. 4 to 6, the conductive film 4 may be disposed in the ceramic dielectric 3 and partially extend on the surface of the ceramic dielectric 3 opposite to the other unit electrode 2 on the end of the ceramic dielectric 3 through the ceramic dielectric 3. In the plasma generating electrode 1 shown in FIG. 4, through-holes 7 are formed in the ceramic dielectric 3, and the conductive film 4 is disposed to pass through the through-holes 7. FIG. 4 is a cross-sectional view schematically showing the plasma generating electrode according to another embodiment of the present invention. FIG. 5 is a cross-sectional view schematically showing the unit electrode used for the plasma generating electrode shown in FIG. 4, and FIG. 6 is a plan view of the unit electrode shown in FIG. 5.

As shown in FIGS. 1 to 3, at least one of the opposing unit electrodes 2 is a barrier discharge electrode including the ceramic dielectric 3 as a dielectric and the conductive film 4. When at least one unit electrode 2 includes the ceramic dielectric 3, a nonuniform discharge such as a spark can be reduced, and small discharges can be caused to occur between the unit electrodes 2 at a number of locations in comparison with the case of causing a discharge using electrodes formed only of a conductive material. Since such small discharges involve a small amount of current in comparison with a spark discharge and the like, power consumption can be reduced. Moreover, the discharge stops before the movement of ions occurs due to the presence of the dielectric so that the movement of electrons becomes dominant between the unit electrodes 2, whereby nonthermal plasma which does not cause an increase in temperature can be generated. Therefore, the plasma generating electrode 1 according to this embodiment may be used for a plasma reactor which causes reaction of a gas containing a specific component, such as an exhaust gas processing device which processes an exhaust gas discharged from an automotive engine, a combustion furnace, and the like, or an ozonizer which produces ozone by reacting oxygen in the air or the like.

In the plasma generating electrode 1 shown in FIG. 1, both of the opposing unit electrodes 2 include the ceramic dielectric 3 and the conductive film 4 disposed in the ceramic dielectric 3 and partially extending on the surface of the ceramic dielectric 3 opposite to the other unit electrode 2 on the end of the ceramic dielectric 3. Note that it suffices that at least one of the opposing unit electrodes 2 forming the plasma generating electrode 1 include the ceramic dielectric 3 and the conductive film 4. When only one of the opposing unit electrodes includes the ceramic dielectric and the conductive film (not shown), the other of the opposing unit electrodes may be a sheet-shaped electrode merely exhibiting conductivity. In this case, the configuration of the other of the opposing unit electrodes is not particularly limited. For example, an electrode such as a sheet-shaped electrode formed of a conductive metal or the like may be suitably used.

In the plasma generating electrode 1 shown in FIG. 1, the conductive films 4 extend in the opposite directions on the positive side (or ground side) unit electrode 2 and the negative side (or ungrounded (voltage application) side) unit electrode 2. The conductive terminals 5 of the same polarity are disposed on the ends on the same side. Therefore, electrical connection can be conveniently achieved using a collector member (not shown) or the like, and reliable electrical connection can be achieved. Moreover, the size of the plasma generating electrode 1 can be reduced. In the plasma generating electrode according to this embodiment, all of the conductive terminals may be disposed on the ends on the same side (not shown) irrespective of whether the unit electrode is the positive side (or ground side) or the negative side (or ungrounded side) insofar as a necessary insulation distance can be provided between the conductive terminals disposed on the adjacent unit electrodes. This configuration allows all electrical connections to be achieved on the ends of the unit electrodes on one side, whereby the plasma generating electrode can be easily wired.

The conductive terminal 5 used for the plasma generating electrode 1 according to this embodiment is a terminal to which a wire (not shown) or a collector member (not shown) for supplying power from a specific power supply (not shown) to the conductive film 4 is connected. The shape of the conductive terminal 5 is not particularly limited. It is preferable that the conductive terminal 5 be disposed to cover almost the entire area of the conductive film 4 extending on the surface of the ceramic dielectric 3. This configuration allows the conductive film 4 extending on the surface of the ceramic dielectric 3 to be protected by the conductive terminal 5. For example, a sheet-shaped member exhibiting conductivity may be suitably used as the conductive terminal 5.

In the plasma generating electrode 1 according to this embodiment, the area of the conductive terminal 5 can be increased by disposing the conductive terminal 5 on the surface of the unit electrode 2, whereby a collector member can be easily connected by welding or the like when using stainless steel foil as the collector member, for example. Moreover, electrical connection can be achieved using a method of holding the conductive terminal 5 with a clip or the like, for example. It is also possible to achieve electrical connection by caulking the conductive terminal 5 formed of a metal. When achieving electrical connection by caulking the conductive terminal 5, it is preferable to dispose the conductive terminals 5 on both sides of the unit electrode 2 so that load is not applied to the ceramic dielectric 3 forming the unit electrode 2 to a large extent.

The method of bonding the conductive terminal 5 to the conductive film 4 is not particularly limited. For example, the conductive terminal 5 is preferably bonded to the conductive film 4 by welding, brazing, or diffusion bonding. This configuration increases the bond strength, whereby an electrical connection exhibiting excellent impact resistance can be achieved. As a specific method for welding, brazing, or diffusion bonding, a method generally used for metal bonding may be used. For example, a gold solder, a silver solder, a copper solder, a nickel solder, an aluminum solder, or the like may be appropriately selected depending on the combination of the material for the conductive film and the metal material for the conductive terminal.

The material for the conductive terminal 5 is not particularly limited insofar as the material includes a conductive metal. It is preferable that the material for the conductive terminal 5 include at least one metal selected from the group consisting of iron, nickel, chromium, cobalt, titanium, aluminum, gold, silver, and copper. When using a sheet-shaped member as the conductive terminal 5, metal alloys such as an iron-nickel-cobalt alloy, an iron-nickel-chromium alloy, an iron-aluminum-chromium alloy, a titanium-aluminum alloy, a nickel-chromium alloy, a gold alloy, a silver alloy, and a copper alloy can be given as preferred examples of the material for the conductive terminal 5. When using a sheet-shaped member as the conductive terminal 5, it is preferable that the sheet-shaped member have a thickness of 1 mm or less, although the thickness varies depending on the thickness of the unit electrode 2.

The conductive terminal 5 used for the plasma generating electrode 1 according to this embodiment may be formed by applying a conductive material to the surface of the conductive film 4 extending on the surface of the ceramic dielectric 3 instead of using a sheet-shaped member formed in advance. Such a conductive terminal 5 may be formed of a conductive plating layer provided on the conductive film 4 extending on the surface of the ceramic dielectric 3 opposite to the other unit electrode 2 at the end of the ceramic dielectric 3, for example. The conductive plating layer may be formed by plating the surface of the conductive film 4 with a conductive material including a conductive metal using a method such as electroplating or electroless plating. When using the conductive plating layer as the conductive terminal 5, a step of bonding a metal conductive terminal such as a brazing step becomes unnecessary. Moreover, since the thickness of the terminal can be reduced, reliability in terms of thermal stress is improved.

The material for the conductive plating layer is not particularly limited insofar as the material includes a conductive metal. It is preferable that the material for the conductive plating layer include at least one metal selected from the group consisting of iron, nickel, chromium, cobalt, titanium, aluminum, gold, silver, and copper. The method of forming the conductive plating layer is not particularly limited. Electroplating or electroless plating may be suitably used. When forming the conductive terminal 5 by electroplating or electroless plating, since the thickness of the resulting conductive terminal 5 is relatively reduced, it is preferable to increase the thickness of the conductive film 4 extending on the surface of the ceramic dielectric 3, although this measure need not necessarily be employed.

The conductive terminal 5 may be formed by applying an acid-resistant conductive material (metal paste) having a composition which provides a coefficient of thermal expansion close to that of the conductive film 4 or by molten metal plating (method of plating a material by immersing the material in a molten metal) instead of forming the conductive terminal 5 using a coating method such as electroplating or electroless plating. The thickness of the conductive terminal 5 can be reduced by forming the conductive terminal 5 using the above coating method in comparison with the case of forming the conductive terminal 5 using a coating method such as electroplating or electroless plating. The conductive material (metal paste) may be applied using a method similar to a method of forming the conductive film 4 by printing. The conductive terminal 5 may be formed by forming a plating layer using a method such as molten metal plating and subjecting the plating layer to electroless plating such as electroless nickel plating.

The conductive material for forming the conductive terminal 5 is not particularly limited. The conductive material for the conductive terminal 5 may be the same as or differ from the material for forming the conductive film 4. For example, when using a material differing from that of the conductive film 4 as the conductive material for forming the conductive terminal 5, the resulting conductive terminal 5 exhibits excellent heat resistance and bondability (e.g. solder wettability) to the collector member for electrically connecting the conductive terminal 5, and laser welding or ultrasonic welding of the collector member and the conductive terminal 5 is facilitated.

For example, when using a noble metal such as platinum as the material for forming the conductive film 4, the same material as the conductive film 4 may be used as the conductive material for forming the conductive terminal 5. When using the same material as the conductive film 4 as the conductive material for the conductive terminal 5, the conductive film 4 extending on the surface of the ceramic dielectric 3 and the conductive terminal 5 can be integrated. When using the plasma generating electrode 1 at room temperature or a relatively low temperature, the conductive film 4 and the conductive terminal 5 may be integrally formed using a single material such as nickel.

When forming the conductive terminal 5 by applying the conductive material (metal paste), it is preferable to integrate the conductive film 4 extending on the surface of the ceramic dielectric 3 and the resulting conductive terminal 5 by firing. This provides a conductive terminal 5 with excellent density and adhesion. When forming the conductive terminal 5 by electroplating or electroless plating, the adhesion of the conductive terminal 5 to the conductive film 4 extending on the surface of the ceramic dielectric 3 is improved by heat treatment or the like. The thickness of the conductive terminal 5 is not particularly limited. For example, when using the conductive terminal 5 formed by coating, it is preferable that the metal plating layer have a thickness of 0.001 to 0.1 mm.

The ceramic dielectric 3 used for the plasma generating electrode 1 according to this embodiment is not particularly limited insofar as the ceramic dielectric 3 can be suitably used as a dielectric. It is preferable that the ceramic dielectric 3 include at least one compound selected from the group consisting of aluminum oxide, magnesium oxide, silicon oxide, silicon nitride, aluminum nitride, mullite, spinel, cordierite, magnesium-calcium-titanium oxide, barium-titanium-zinc oxide, and barium-titanium oxide, for example. If the ceramic dielectric 3 includes the above compound, a ceramic dielectric 3 exhibiting excellent heat resistance can be obtained.

The ceramic dielectric 3 used for the plasma generating electrode 1 according to this embodiment may be formed using a tape-shaped unfired ceramic formed body such as a ceramic green sheet formed in the shape of a tape by a doctor blade method, for example. The ceramic dielectric 3 may also be formed using a sheet obtained by extrusion. A flat sheet formed by powder dry pressing may also be used.

The conductive film 4 is not particularly limited insofar as plasma can be generated by applying a voltage between the unit electrodes 2. It is preferable that the conductive film 4 include at least one metal selected from the group consisting of tungsten, molybdenum, manganese, chromium, titanium, zirconium, nickel, iron, silver, copper, platinum, and palladium.

The method of disposing the conductive film 4 in the ceramic dielectric 3 is not particularly limited. For example, the conductive film 4 may be disposed in the ceramic dielectric 3 by applying a conductive film paste, prepared by mixing a powder of a metal mentioned above as the preferable material for the conductive film 4, an organic binder, and a solvent such as terpineol, to a ceramic green sheet used as the ceramic dielectric 3. As preferred examples of the specific coating method, screen printing, calender rolling, spraying, electrostatic painting, dip coating, knife coating, inkjetting, chemical vapor deposition, physical vapor deposition, and the like can be given. According to the above method, the material can be easily applied in a specific shape, whereby a conductive film 4 can be formed which exhibits excellent surface smoothness (flatness) and has a small thickness.

When forming the unit electrode 2 including the sheet-shaped ceramic dielectric 3 and the conductive film 4 disposed in the ceramic dielectric 3 and partially extending on the surface of the ceramic dielectric 3 opposite to another unit electrode 2 on the end of the ceramic dielectric 3, the conductive film paste is applied to one surface (coating surface) of the ceramic green sheet, as described above. In this case, it is preferable to apply the conductive film paste so that the conductive film paste is partially positioned outside the coating surface of the ceramic green sheet.

Another ceramic green sheet (ceramic green sheet to which the conductive film paste is not applied) is stacked on the ceramic green sheet to which the conductive film paste is applied so that the conductive film paste is covered. This allows the conductive film paste to be disposed between (inside) the ceramic green sheets.

The conductive film paste is applied to the surface of the ceramic green sheet (surface opposite to another unit electrode 2 in the plasma generating electrode 1 shown in FIG. 1) to extend from the conductive film paste between the ceramic green sheets through the end face of the ceramic green sheet. When the conductive film paste is applied in the first step so that the conductive film paste is partially positioned outside the coating surface of the ceramic green sheet, the conductive film paste may be continuously applied to extend from the portion positioned outside the coating surface to the end face and the surface of the ceramic green sheet. When the conductive film paste is applied in the first step so that the conductive film paste is not partially positioned outside the coating surface of the ceramic green sheet, the stacked ceramic green sheets may be cut so that the conductive film paste is exposed, and the conductive film paste may be continuously applied to extend from the cut surface to the end face and the surface of the ceramic green sheet. The ceramic green sheets to which the conductive film paste is applied are fired to form the unit electrode 2 shown in FIG. 1 including the sheet-shaped ceramic dielectric 3 and the conductive film 4 disposed in the ceramic dielectric 3 and partially extending on the surface of the ceramic dielectric 3 opposite to another unit electrode 2 on the end of the ceramic dielectric 3.

The unit electrode 2 of the plasma generating electrode 1 shown in FIGS. 4 to 6 may be formed by stacking a ceramic green sheet in which through-holes are formed at least on one end on the ceramic green sheet to which the conductive film paste is applied so that the conductive film paste is covered, and filling the through-holes with the conductive film paste and applying the conductive film paste to the surface of the ceramic green sheet including the openings of the through-holes after stacking the ceramic green sheets.

The plasma generating electrode 1 according to this embodiment includes a holding member 6 for advantageously holding the unit electrodes 2 in a state in which the unit electrodes 2 are separated at a specific interval. The holding member 6 is a member disposed between the unit electrodes 2 to form a plasma generation space. It is preferable that the holding member 6 include at least one compound selected from the group consisting of aluminum oxide, magnesium oxide, silicon oxide, silicon nitride, aluminum nitride, mullite, spinel, and cordierite. It is preferable that the holding member 6 exhibit electric insulating properties from the viewpoint of preventing a local creeping discharge.

In the plasma generating electrode 1 shown in FIG. 1, six unit electrodes 2 are held by the holding members 6 on both ends. The number of unit electrodes 2 is not limited thereto. It suffices that the plasma generating electrode 1 include two or more unit electrodes 2 and the unit electrodes 2 be disposed opposite to each other.

The thicknesses of the ceramic dielectric 3 and the conductive film 4 in the plasma generating electrode 1 according to this embodiment may be appropriately selected taking into consideration the amount and intensity of plasma to be generated, the voltage applied between the unit electrodes 2, and the like.

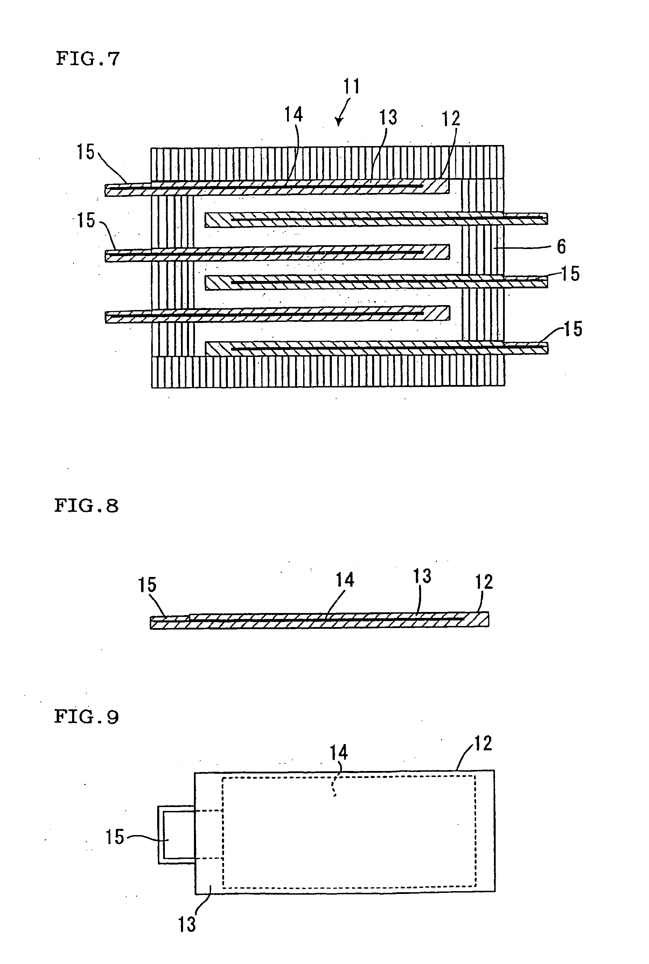

One embodiment of the plasma generating electrode according to the second aspect of the present invention is described below in detail. FIG. 7 is a cross-sectional view schematically showing one embodiment of the plasma generating electrode according to the present invention. FIG. 8 is a cross-sectional view schematically showing a unit electrode used for the plasma generating electrode shown in FIG. 7, and FIG. 9 is a plan view of the unit electrode shown in FIG. 8. As shown in FIGS. 7 to 9, a plasma generating electrode 11 includes two or more opposing sheet-shaped unit electrodes 12 and conductive terminals 15 as connection portions for applying a voltage between the unit electrodes 12, and is capable of generating plasma upon application of a voltage between the unit electrodes 12 through the conductive terminals 15, wherein at least one of the opposing unit electrodes 12 includes a sheet-shaped ceramic dielectric 13 and a conductive film 14 disposed in the ceramic dielectric 13 and having a further portion extending outside the ceramic dielectric 13 in the same direction as a direction in which the conductive film 14 is disposed in the ceramic dielectric 13, and the conductive terminal 15 is electrically connected with the conductive film 14 extending outside the ceramic dielectric 13.

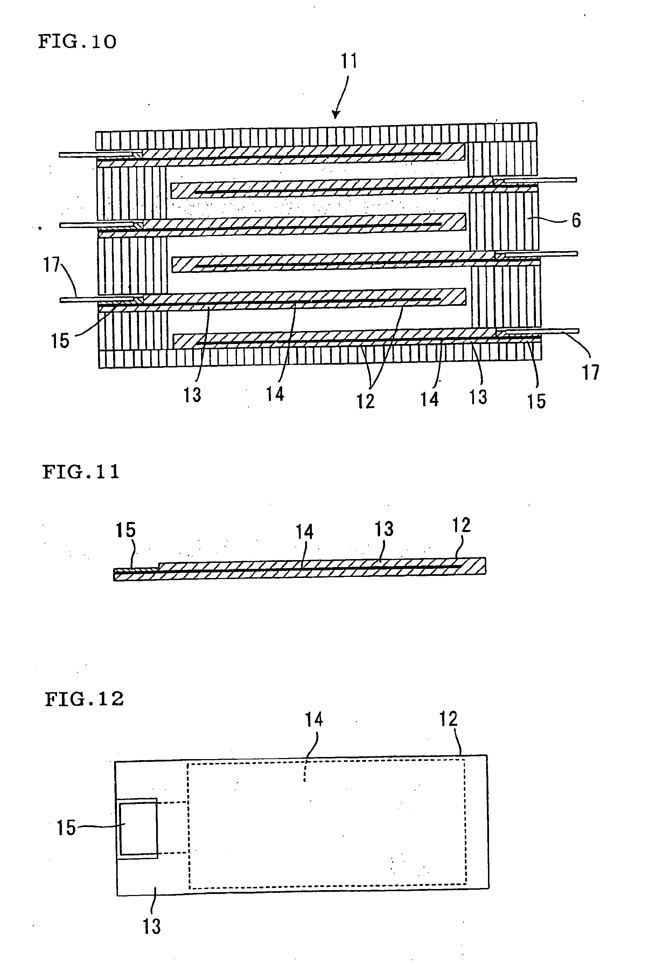

In the plasma generating electrode 11 according to this embodiment, the thickness of the portion in which the conductive terminal 15 is disposed can be reduced in comparison with the thickness of the ceramic dielectric 13, as shown in FIGS. 7 to 9. Therefore, even if a collector member 17 (collector terminal) formed of stainless steel foil or the like is welded to the conductive terminal 15, the unit electrode 12 does not interfere with the holding member 6 when stacking the unit electrodes 12. FIG. 10 is a cross-sectional view schematically showing the plasma generating electrode according to another embodiment.

According to the above configuration, since the area of the connection portion of the conductive terminal can be increased in comparison with an ordinary plasma generating electrode, effects similar to those of the embodiment (plasma generating electrode 1) according to the first aspect of the present invention shown in the FIG. 1 can be obtained, whereby simple and reliable electrical connection is achieved. As the unit electrode 12 including the ceramic dielectric 13 and the conductive terminal 15, a unit electrode may be suitably used which is formed by stacking two ceramic green sheets forming the ceramic dielectric 13 so that the conductive film 14 is disposed between the ceramic green sheets, as shown in FIGS. 7 to 9, for example. Specifically, a large ceramic green sheet such as a ceramic green sheet having a shape corresponding to the conductive film 14 is used as one of the two ceramic green sheets, and a conductive film paste for the conductive film 14 is applied to the surface of this ceramic green sheet. The other ceramic green sheet is stacked so that the applied conductive film paste is partially positioned outside the ceramic green sheet. A unit electrode 12 including the ceramic dielectric 13 and the conductive film 14 partially extending outside the ceramic dielectric 13 in the same direction as the direction in which the conductive film 14 is disposed in the ceramic dielectric 13 may be conveniently formed using a method similar to the method of forming the unit electrode 2 (see FIG. 1) according to the embodiment of the first aspect of the present invention.

In the plasma generating electrode 11 according to this embodiment, it suffices that at least one of the opposing unit electrodes 12 include the ceramic dielectric 13 and the conductive film 14 partially extending outside the ceramic dielectric 13 in the same direction as the direction in which the conductive film 14 is disposed in the ceramic dielectric 13. For example, both of the opposing unit electrodes 12 may include the ceramic dielectric 13 and the conductive film 14, or only one of the opposing unit electrodes 12 may include the ceramic dielectric 13 and the conductive film 14. When only one of the opposing unit electrodes includes the ceramic dielectric and the conductive film (not shown), the other of the opposing unit electrodes may be a sheet-shaped electrode merely exhibiting conductivity. In this case, the configuration of the other of the opposing unit electrodes is not particularly limited. For example, an electrode such as a sheet-shaped electrode formed of a conductive metal may be suitably used.

In the unit electrode 12 shown in FIGS. 8 and 9, the ceramic dielectric 13 on one surface of the conductive film 14 has almost the same shape as the conductive film 14 extending outside the ceramic dielectric 13 in order to support one surface of the conductive film 14 extending outside the ceramic dielectric 13, and the conductive terminal 15 is electrically connected with the conductive film 14 extending outside the ceramic dielectric 13. As shown in FIGS. 11 and 12, the ceramic dielectric 13 may be partially depressed when viewed from the surface of the unit electrode 12, and the conductive film 14 may be disposed to extend in the depressed portion of the ceramic dielectric 13, for example. In this case, the conductive terminal 15 is electrically connected with the conductive film 14 extending in the depressed portion of the ceramic dielectric 13. FIG. 11 is a cross-sectional view schematically showing another example of the unit electrode used for the plasma generating electrode shown in FIG. 7, and FIG. 12 is a plan view of the unit electrode shown in FIG. 11.

In the plasma generating electrode 11 shown in FIG. 7, the conductive films 4 extend in the opposite directions on the positive side (or ground side) unit electrode 12 and the negative side (or ungrounded (voltage application) side) unit electrode 12. The conductive terminals 15 of the same polarity are disposed on the ends positioned on the same side. Therefore, electrical connection can be conveniently achieved using a collector member (not shown) or the like, and reliable electrical connection can be achieved. Moreover, the size of the plasma generating electrode 11 can be reduced. In the plasma generating electrode according to this embodiment, all of the conductive terminals may be disposed on the ends on the same side irrespective of whether the unit electrode is the positive side (or ground side) or the negative side (or ungrounded side) (not shown) insofar as a necessary insulation distance can be provided between the conductive terminals disposed on the adjacent unit electrodes. This configuration allows all electrical connections to be achieved on the ends of the unit electrodes on one side, whereby the plasma generating electrode can be easily wired.

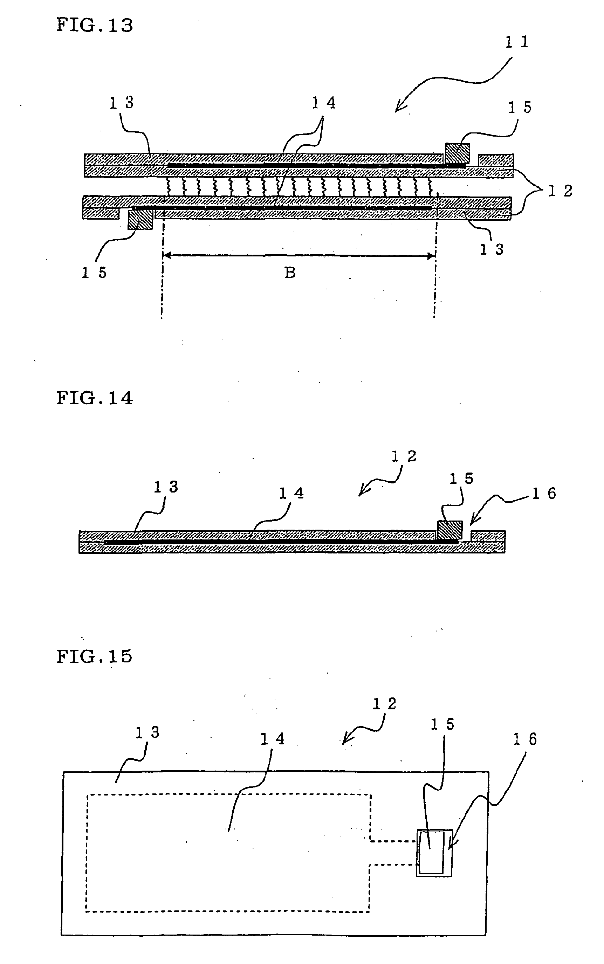

In the plasma generating electrode 11 according to this embodiment, the conductive film 14 may not extend to the edge of the ceramic dielectric 13, and may be exposed to the outside in the portion of the ceramic dielectric 13 inside the edge of the ceramic dielectric 13, as shown in FIGS. 13 to 15, for example. An opening 16 for disposing the conductive terminal 15 on the conductive film 14 is formed in the ceramic dielectric 13 in the portion inside the edge of the ceramic dielectric 13.

FIG. 13 is a cross-sectional view schematically showing another example of the plasma generating electrode according to this embodiment, and FIG. 14 is a cross-sectional view schematically showing the unit electrode used for the plasma generating electrode shown in FIG. 13. FIG. 15 is a plan view of the unit electrode shown in FIG. 14. In FIGS: 13 to 15, the same elements as the plasma generating electrode 11 shown in FIG. 7 are indicated by the same symbols. Description of these elements is omitted.

The unit electrode 12 shown in FIGS. 14 and 15 in which the conductive film 14 extends to be exposed to the outside in the portion of the ceramic dielectric 13 inside the edge of the ceramic dielectric 13 is easily connected electrically with an external power supply or the like by employing the unit electrode 12 shown in FIGS. 14 and 15 for the plasma generating electrode 11 formed of two unit electrodes 12 shown in FIG. 13, or employing the unit electrode 12 shown in FIGS. 14 and 15 as the uppermost and lowermost unit electrodes of the plasma generating electrode in which a number of unit electrodes are stacked (not shown).

When using a configuration in which the conductive film 14 is exposed to the outside in the portion of the ceramic dielectric 13 inside the edge of the ceramic dielectric 13, it is preferable to dispose the conductive films 14 to extend to the portions of the opposing unit electrodes 12 outside a plasma generation region B, and form the opening 16 for disposing the conductive terminal 15 in the ceramic dielectric 13.

As the ceramic dielectric 13 used for the plasma generating electrode 11 shown in FIG. 7 according to this embodiment, a ceramic dielectric formed of the same material as the ceramic dielectric 3 (see FIG. 1) used for the embodiment of the first invention may be suitably used. The ceramic dielectric 13 may be formed using a ceramic green sheet formed in the shape of a tape using a doctor blade method, for example. The ceramic dielectric 13 may also be formed using a sheet obtained by extrusion. A flat sheet formed by powder dry pressing may also be used.

As the conductive film 14, a conductive film formed of the same material as the conductive film 4 (see FIG. 1) used for the embodiment of the first invention may be suitably used. The conductive film 14 may be formed using a method similar to the method of forming the conductive film 4 (see FIG. 1) used for the embodiment of the first invention.

As the conductive terminal 15, a conductive terminal formed of the same material as the conductive terminal 5 (see FIG. 1) used for the embodiment of the first invention may be suitably used. The conductive terminal 15 may be formed using a method similar to the method of forming the conductive terminal 5 (see FIG. 1) used for the embodiment of the first invention. For example, the conductive terminal 15 may be a conductive sheet-shaped member bonded to the conductive film 14 by welding, brazing, or diffusion bonding, or may be formed by applying a conductive material to the surface of the conductive film 14 extending outside the ceramic dielectric 13.

The plasma generating electrode 11 according to this example includes the holding member 6 for advantageously holding the unit electrodes 12 in a state in which the unit electrodes 12 are separated at a specific interval in the same manner as in the embodiment described above of the first aspect of the present invention.

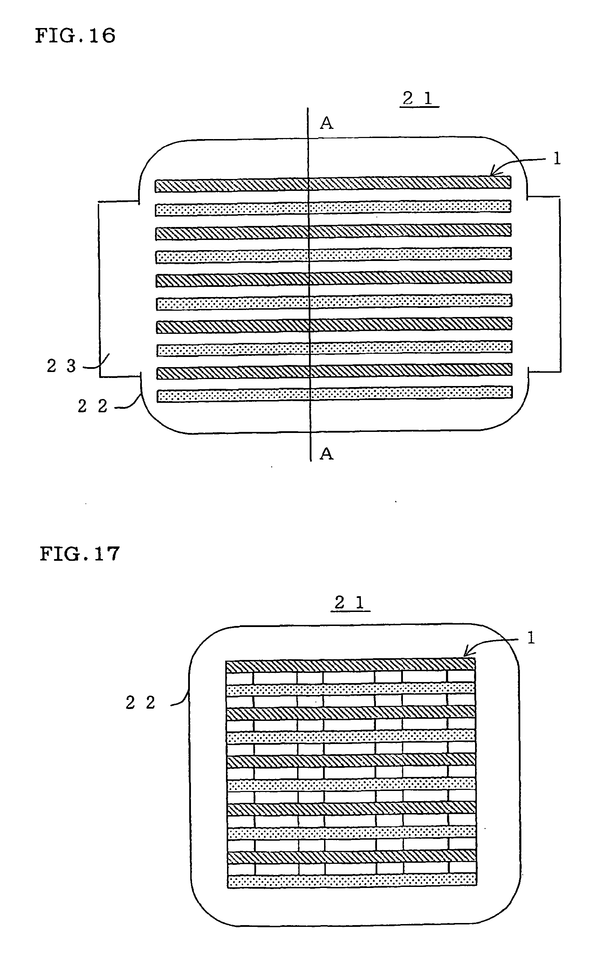

One embodiment of the plasma reactor according to the present invention is described below in detail. FIG. 16 is a cross-sectional view showing another embodiment of the plasma reactor according to the present invention along a plane perpendicular to the surface of a unit electrode forming a plasma generating electrode, and FIG. 17 is a cross-sectional view along the line A-A shown in FIG. 16.

As shown in FIGS. 16 and 17, a plasma reactor 21 according to this embodiment includes one embodiment (plasma generating electrode 1) of the plasma generating electrode according to the first aspect of the present invention as shown in FIG. 1, and a casing 22 having a passage (gas passage 23) for a gas containing a specific component formed therein, wherein, when the gas is introduced into the gas passage 23 of the casing 22, the specific component contained in the gas can be reacted using plasma generated by the plasma generating electrode 1. The plasma reactor 21 according to this embodiment may be suitably used as an exhaust gas processing device or an ozonizer which produces ozone by reacting oxygen in the air, for example. As shown in FIG. 1, in the plasma generating electrode 1 used for the plasma reactor 21 according to this embodiment, at least one of the opposing unit electrodes 2 includes the sheet-shaped ceramic dielectric 3 and the conductive film 4 disposed in the ceramic dielectric 3 and partially extending on the surface of the ceramic dielectric 3 opposite to the other unit electrode 2 on the end of the ceramic dielectric 3, and the conductive terminal 5 is electrically connected with the conductive film 4 disposed on the surface of the ceramic dielectric 3 opposite to the other unit electrode 2 on the end of the ceramic dielectric 3, as described above. Therefore, the connection area of the conductive terminal 5 can be increased, whereby simple and reliable electrical connection can be achieved. Therefore, the plasma reactor 21 shown in FIGS. 16 and 17 can stably generate uniform plasma.

The plasma reactor 21 according to this embodiment may include one embodiment (plasma generating electrode 11 (see FIG. 7)) of the plasma generating electrode according to the second aspect of the present invention instead of one embodiment (plasma generating electrode 1) of the plasma generating electrode according to the first aspect of the present invention. The same effects as described above can also be obtained when the plasma reactor 21 includes one embodiment (plasma generating electrode 11 (see FIG. 7)) of the plasma generating electrode according to the second aspect of the present invention.

The material for the casing 22 forming the plasma reactor 21 shown in FIGS. 16 and 17 according to this embodiment is not particularly limited. For example, it is preferable that the material for the casing 22 be ferritic stainless steel exhibiting excellent conductivity, being lightweight and inexpensive, and showing only a small amount of deformation due to thermal expansion.

The plasma reactor according to this embodiment may include a power supply (not shown) for applying a voltage to the plasma generating electrode. As the power supply, an ordinary power supply may be used insofar as the power supply can supply current which causes plasma to be effectively generated. It is preferable that the power supply be a pulse power supply. It is more preferable that the power supply include at least one SI thyristor. Plasma can be more efficiently generated using such a power supply.

The plasma reactor according to this embodiment may include a power supply component such as an outlet so that current can be supplied from an external power supply instead of providing the power supply in the plasma reactor.

The amount of current supplied to the plasma generating electrode forming the plasma reactor may be appropriately selected depending on the intensity of plasma to be generated. When installing the plasma reactor in an automotive exhaust system, it is preferable that current supplied to the plasma generating electrode be a direct current at a voltage of 1 kV or more, a pulse current having a peak voltage of 1 kV or more and a pulse rate per second of 100 or more (100 Hz or more), an alternating current having a peak voltage of 1 kV or more and a frequency of 100 or more (100 Hz or more), or a current generated by superimposing two of these currents. This configuration allows efficient generation of plasma.

### EXAMPLES

The present invention is described below in detail by way of examples. Note that the present invention is not limited to the following examples.

### (Example 1)

A slurry for forming a ceramic green sheet was prepared using an aluminum oxide powder with a purity of 93 mass%. A ceramic green sheet in the shape of a tape having a rectangular surface shape (length: 100 mm, width: 50 mm) and having a thickness of 0.5 mm was formed using the resulting slurry. A pair of the resulting ceramic green sheets was used. A conductive paste using tungsten was printed on one side of one of the pair of ceramic green sheets to a length of 78 mm, a width of 48 mm, and a thickness of 0.01 mm to form a conductive film.

The conductive film was formed to extend to one end at a width of 10 mm in the same manner as in the plasma generating electrode 1 shown in FIG. 3 so that an electrode terminal with a length of 10 mm could be formed on the end of the unit electrode.

The pair of ceramic green sheets thus obtained was stacked and integrated so that the conductive film was covered to form an unfired unit electrode. A conductive paste using tungsten was printed on the surface of one end of the integrated unfired unit electrode to a width of 10 mm, a length of 10 mm, and a thickness of 0.01 mm to form a conductive film extending on the surface of the unfired unit electrode. In order to electrically connect the conductive film extending on the surface of the unfired unit electrode with the conductive film disposed in the ceramic dielectric, a conductive paste using tungsten was printed on the end face of the unfired unit electrode to a width of 10 mm.

The resulting unfired unit electrode was fired at 1450°C to obtain a unit electrode. The surface of the conductive film extending on the surface and the side surface of the unit electrode formed using the conductive paste using tungsten was subjected to electroless nickel-boron (Ni-B) plating to a thickness of 0.005 mm. A kovar foil with a thickness of 0.2 mm was brazed onto the surface of the end of the unit electrode in the area with a length of 10 mm and a width of 10 mm using a copper solder to obtain a unit electrode having a conductive terminal on the surface on the end.

A collector member formed of stainless steel foil with a width of 5 mm and a length of 30 mm was connected to the conductive terminal of the resulting unit electrode by ultrasonic welding. A plasma generating electrode was produced by stacking twenty unit electrodes to which the collector member formed of stainless steel foil was connected. The load side and ground side collector members formed of stainless steel foil connected to the unit electrodes were respectively bundled and connected with a pulse power supply including an SI thyristor.

An electrical connection load test was conducted in which a specific voltage was applied to the resulting plasma generating electrode to generate plasma. It was confirmed that a uniform discharge was achieved in a gas stream at 600°C. A thermal vibration test was also conducted in which a specific vibration was applied to the heated plasma generating electrode. After conducting the thermal vibration test at 600°C and 30 G for 100 hours, a voltage was applied to the plasma generating electrode to generate plasma. It was confirmed that a uniform discharge occurred between the unit electrodes. From the above test results, it was confirmed that the portion around the conductive terminal exhibited reliability under the thermal vibration conditions.

### INDUSTRIAL APPLICABILITY

The plasma generating electrode according to the present invention allows simple and reliable electrical connection of each unit electrode. Since the plasma reactor according to the present invention includes such a plasma generating electrode, the plasma reactor may be suitably used as an air cleaner and an exhaust gas processing device.

## Claims

1. A plasma generating electrode (1) comprising:
two or more opposing sheet-shaped unit electrodes (2) and
conductive terminals (5) as connection portions for applying a voltage between the unit electrodes (2), and capable of generating plasma upon application of a voltage between the unit electrodes (2) through the conductive terminals (5),
at least one of the opposing unit electrodes (2) including a sheet-shaped ceramic dielectric (3) and a conductive film (4), wherein the conductive film (4) is disposed in the ceramic dielectric (3) and **characterized in that** the conductive film (4) has a further portion, either:
(a) extending on a surface of the ceramic dielectric (3) at an end of the ceramic dielectric (3) opposite to the other unit electrode (2), the conductive terminal (5) for each such electrode (2) being disposed on the portion of the conductive film (4) extending on the surface of the ceramic dielectric (3) at the end of the ceramic dielectric (3) opposite to the other unit electrode (2); or
(b) extending outside the ceramic dielectric (3) in the same direction as a direction in which the conductive film (4) is disposed in the ceramic dielectric (3), the conductive terminal (5) for each such electrode (2) being disposed on the further portion of the conductive film (4) extending outside the ceramic dielectric (3).

2. The plasma generating electrode (1) according to claim 1, wherein the conductive terminal (5) is bonded to the conductive film (4) by welding, brazing, or diffusion bonding.

3. The plasma generating electrode (1) according to claim 1, wherein the conductive terminal (5) is formed by applying a conductive material to a surface of the conductive film (4).

4. The plasma generating electrode (1) according to any one of claims 1 to 3, wherein the conductive terminal (5) includes at least one metal selected from the group consisting of iron, nickel, chromium, cobalt, titanium, aluminum, gold, silver, and copper.

5. The plasma generating electrode (1) according to any one of claims 1 to 4, wherein the conductive film (4) includes at least one metal selected from the group consisting of tungsten, molybdenum, manganese, chromium, titanium, zirconium, nickel, iron, silver, copper, platinum, and palladium.

6. The plasma generating electrode (1) according to any one of claims 1 to 5, comprising a collector member (17) which electrically connects the unit electrodes (2) of the same polarity.

7. The plasma generating electrode (1) according to any one of claims 1 to 6, wherein the conductive terminal (5) is disposed to cover almost the entire area of the conductive film (4) extending on the surface of the ceramic dielectric (3) opposite to the other unit electrode (2) at the end of the ceramic dielectric (3) or extending outside the ceramic dielectric (3).

8. A plasma reactor (21) comprising the plasma generating electrode (1) according to any one of claims 1 to 7, and a casing (22) having a passage (gas passage) (23) for a gas containing a specific component formed therein, wherein, when the gas is introduced into the gas passage (23) of the casing (22), the specific component contained in the gas can be reacted using plasma generated by the plasma generating electrode (1).

9. The plasma reactor (21) according to claim 8, further comprising a pulse power supply for applying a voltage to the plasma generating electrode (1).

10. The plasma reactor (21) according to claim 9, wherein the pulse power supply includes at least one SI thyristor.

## Patentansprüche

1. Plasmaerzeugungselektrode (1), die Folgendes umfasst:
zwei oder mehr einander gegenüberliegende plattenförmige Einheitselektroden (2) und
leitfähige Anschlüsse (5) als Verbindungsabschnitte zum Anlegen einer Spannung zwischen den Einheitselektroden (2), und die in der Lage ist, bei Anlegen einer Spannung zwischen den Einheitselektroden (2) über die leitfähigen Anschlüsse (5) Plasma zu erzeugen,
wobei zumindest eine der einander gegenüberliegende Einheitselektroden (2) ein plattenförmiges Keramikdielektrikum (3) und einen leitfähigen Film (4) umfasst, wobei der leitfähige Film (4) in dem Keramikdielektrikum (3) angeordnet ist und **dadurch gekennzeichnet ist, dass** der leitfähige Film (4) einen weiteren Abschnitt aufweist, (a) der sich entweder auf einer Oberfläche des Keramikdielektrikums (3) an einem Ende des Keramikdielektrikums (3), das der anderen Einheitselektrode (2) entgegengesetzt ist erstreckt, wobei der leitfähige Anschluss (5) für jede Elektrode (2) auf dem Abschnitt des leitfähigen Films (4) angeordnet ist, der sich auf der Oberfläche des Keramikdielektrikums (3) am der anderen Einheitselektrode entgegengesetzten Ende des Keramikdielektrikums (3) angeordnet ist;
(b) oder sich außerhalb des Keramikdielektrikums (3) in dieselbe Richtung erstreckt wie jene Richtung, in der der leitfähige Film (4) in dem Keramikdielektrikum (3) angeordnet ist, wobei der leitfähige Anschluss (5) für jede Elektrode (2) auf dem weiteren Abschnitt des leitfähigen Films (4) angeordnet ist, der sich außerhalb des Keramikdielektrikums (3) erstreckt.

2. Plasmaerzeugungselektrode (1) nach Anspruch 1, worin der leitfähige Anschluss (5) durch Schweißen, Löten oder Diffusionskontaktherstellung haftschlüssig mit dem leitfähigen Film (4) verbunden wird.

3. Plasmaerzeugungselektrode (1) nach Anspruch 1, worin der leitfähige Anschluss (5) durch das Aufbringen eines leitfähigen Materials auf eine Oberfläche des leitfähigen Films (4) ausgebildet wird.

4. Plasmaerzeugungselektrode (1) nach einem der Ansprüche 1 bis 3, worin der leitfähige Anschluss (5) zumindest ein aus der aus Eisen, Nickel, Chrom, Cobalt, Titan, Aluminium, Gold, Silber und Kupfer bestehenden Gruppe ausgewähltes Metall umfasst.

5. Plasmaerzeugungselektrode (1) nach einem der Ansprüche 1 bis 4, worin der leitfähige Film (4) zumindest ein aus der aus Wolfram, Molybdän, Mangan, Chrom, Titan, Zirkonium, Nickel, Eisen, Silber, Kupfer, Platin und Palladium bestehenden Gruppe ausgewähltes Metall umfasst.

6. Plasmaerzeugungselektrode (1) nach einem der Ansprüche 1 bis 5, die ein Kollektorelement (17) umfasst, das die Einheitselektroden (2) mit derselben Polarität elektrisch verbindet.

7. Plasmaerzeugungselektrode (1) nach einem der Ansprüche 1 bis 6, worin der leitfähige Anschluss (5) angeordnet ist, um fast die gesamte Fläche des leitfähigen Films (4) zu bedecken, der sich auf der Oberfläche des Keramikdielektrikums (3) der anderen Einheitselektrode (2) entgegengesetzt am Ende des Keramikdielektrikums (3) oder außerhalb des Keramikdielektrikums (3) erstreckt.

8. Plasmareaktor (21), der Folgendes umfasst: eine Plasmaerzeugungselektrode (1) nach einem der Ansprüche 1 bis 7 sowie ein Gehäuse (22) mit einem Durchlass (Gasdurchlass) (23) für ein Gas, das eine bestimmte darin ausgebildete Komponente enthält, worin bei Einleiten von Gas in den Gasdurchlass (23) des Gehäuses (22) die in dem Gas enthaltene spezifische Komponente unter Verwendung von durch die Plasmaerzeugungselektrode (1) erzeugtem Plasma umgesetzt werden kann.

9. Plasmareaktor (21) nach Anspruch 8, der ferner eine Impulsspannungsversorgung zum Anlegen von Spannung an die Plasmaerzeugungselektrode (1) umfasst.

10. Plasmareaktor (21) nach Anspruch 9, worin die Impulsstromversorgung zumindest einen SI-Thyristor umfasst.

## Revendications

1. Électrode génératrice de plasma (1) comprenant :
deux ou plusieurs électrodes individuelles en forme de feuille en opposition (2) et
des bornes conductrices (5) en tant que parties de connexion destinées à appliquer une tension entre les électrodes individuelles (2), et capables de générer un plasma par application d'une tension entre les électrodes individuelles (2) via les bornes conductrices (5),
au moins l'une des électrodes individuelles (2) en opposition comprenant un diélectrique en céramique en forme de feuille (3) et un film conducteur (4), dans laquelle le film conducteur (4) est disposé dans le diélectrique en céramique (3) et **caractérisée en ce que** le film conducteur (4) comporte une partie supplémentaire, soit :
(a) s'étendant sur une surface du diélectrique en céramique (3) au niveau d'une extrémité du diélectrique en céramique (3) opposée à l'autre électrode individuelle (2), la borne conductrice (5) pour chacune de ces électrodes (2) étant disposée sur la partie du film conducteur (4) s'étendant sur la surface du diélectrique en céramique (3) au niveau de l'extrémité du diélectrique en céramique (3) opposée à l'autre électrode individuelle (2) ; soit
(b) s'étendant à l'extérieur du diélectrique en céramique (3) dans la même direction qu'une direction dans laquelle le film conducteur (4) est disposé dans le diélectrique en céramique (3), la borne conductrice (5) pour chacune de ces électrodes (2) étant disposée sur la partie supplémentaire du film conducteur (4) s'étendant à l'extérieur du diélectrique en céramique (3).

2. Électrode génératrice de plasma (1) selon la revendication 1, dans laquelle la borne conductrice (5) est reliée au film conducteur (4) par soudage, brasage ou liaison par diffusion.

3. Électrode génératrice de plasma (1) selon la revendication 1, dans laquelle la borne conductrice (5) est formée en appliquant un matériau conducteur sur une surface du film conducteur (4).

4. Électrode génératrice de plasma (1) selon l'une quelconque des revendications 1 à 3, dans laquelle la borne conductrice (5) comprend au moins un métal choisi dans le groupe constitué du fer, du nickel, du chrome, du cobalt, du titane, de l'aluminium, de l'or, de l'argent et du cuivre.

5. Électrode génératrice de plasma (1) selon l'une quelconque des revendications 1 à 4, dans laquelle le film conducteur (4) comprend au moins un métal choisi dans le groupe constitué du tungstène, du molybdène, du manganèse, du chrome, du titane, du zirconium, du nickel, du fer, de l'argent, du cuivre, du platine et du palladium.

6. Électrode génératrice de plasma (1) selon l'une quelconque des revendications 1 à 5, comprenant un élément collecteur (17) qui relie électriquement les électrodes individuelles (2) de même polarité.

7. Électrode génératrice de plasma (1) selon l'une quelconque des revendications 1 à 6, dans laquelle la borne conductrice (5) est disposée de manière à couvrir presque la surface entière du film conducteur (4) s'étendant sur la surface du diélectrique en céramique (3) opposée à l'autre électrode individuelle (2) au niveau de l'extrémité du diélectrique en céramique (3) ou s'étendant à l'extérieur du diélectrique en céramique (3).

8. Réacteur à plasma (21) comprenant l'électrode génératrice de plasma (1) selon l'une quelconque des revendications 1 à 7, et un boîtier (22) comportant un passage (passage destiné aux gaz) (23) pour un gaz contenant un composant spécifique y étant formé, dans lequel, lorsque le gaz est introduit dans le passage destiné aux gaz (23) du boîtier (22), le composant spécifique contenu dans le gaz peut être mis à réagir en utilisant le plasma généré par l'électrode génératrice de plasma (1).

9. Réacteur à plasma (21) selon la revendication 8, comprenant en outre une source d'alimentation en impulsions destinée à appliquer une tension à l'électrode génératrice de plasma (1).

10. Réacteur à plasma (21) selon la revendication 9, dans lequel la source d'alimentation en impulsions comprend au moins un thyristor à induction statique.
